# EUROPEAN PATENT APPLICATION

(11) **EP 4 404 552 A1**
(43) Date of publication of application: **24.07.2024**
(21) Application number: 23152061.0
(22) Date of filing: 17.01.2023
(51) Int. Cl.: H04N 1/60

(54) **METHOD FOR IMAGE PROCESSING**

(71) Applicant: Beijing Xiaomi Mobile Software Co., Ltd., Beijing 100085 (CN)
(72) Inventor: Nikkanen, Jarno, 33720 TAMPERE (FI); Karaoglu, Ali, 33720 TAMPERE (FI)
(74) Representative: dompatent von Kreisler Selting Werner - Partnerschaft von Patent- und Rechtsanwälten mbB

(57) **Abstract**

Method for image processing, preferably implemented in a camera device, including acquiring a Hyperspectral Imaging, HSI, image by an HSI sensor of a field-of-view; normalizing of the HSI information to determine a normalized Spectral Power Distribution, SPD, of the field-of-view; determining from the normalized SPD a light source type, LST, estimate; and processing the image on the basis of the determined LST estimate.

## Description

The present invention relates to a method for image processing, preferably implemented in a camera device such as a mobile terminal. Further, the present invention relates to a device and a software storage device.

In particular, the disclosed invention relates to use of hyperspectral imaging sensors (HSI) to improve color quality in digital cameras via better detecting the properties of the prevailing ambient illumination, as well as using the calculated illumination estimates for other HSI use cases that require spectral data.

For generating a final image from raw data provided by an image sensor, it might be beneficial to provide an estimate illumination spectrum power distribution (SPD), a light source type estimation (LST) and a correlated color temperature (CCT). Common auto white balancing algorithm (AWB) can estimate CCT well for many scenes, but cannot estimate LST robustly because it is using only RGB data as input and many different SPDs can produce the same raw RGB response on the camera sensor. That is, higher spectral resolution is needed for more robust LST estimation than just the 3 bands from R, G, and B color components.

To keep the color of an object constant under varying illumination conditions, camera color processing pipelines use color constancy algorithms a.k.a. automatic white balancing (AWB) algorithms. This is one of the key components in color processing and obtained by estimating the illuminant white point from the scene. There are static methods that are based on physical or statistical properties of scenes and learning-based methods that learn white point mapping from training data. However, the color constancy algorithms do not address metamerism. Metamerism is a phenomenon that occurs when two colors appear similar under one illumination SPDs and different under another illumination SPDs. Or similar colors are perceived under different illumination SPDs. This phenomenon appears under different viewing angles as well. The reason for this phenomenon is that multiple different SPDs can produce the same response on a typical tri-chromatic imaging system, such as an RGB camera.

A more accurate estimated LST, SPD, and CCT can be used to select more accurately the used lens shading correction (LSC) and color conversion matrix (CCM) parameters during run-time operation, in order to improve the color quality.

Thus, there is a need for an image processing method providing a more accurate LST estimate.

The problem is solved by a method for image processing according to claim 1, a device according to claim 13 and a software storage device according to claim 14.

In an aspect of the present invention, a method for image processing is provided preferably implemented in a camera device such as a mobile terminal. The method includes:
Acquiring a Hyperspectral Imaging (HSI) image including HSI information by an HSI sensor of a field-of-view;
Normalizing of the HSI information to determine a normalized Spectral Power Distribution (SPD) of the field-of-view;
Determining from the normalized SPD a light source type (LST) estimate; and
Processing the image on the basis of the determined LST estimate.

An HSI image is provided by the HSI sensor of the field of view. Therein, the HSI sensor not only provides the information about RGB but may contain more than three and preferably more than ten color channels spreading across the visible spectrum and the near infrared spectrum. From the HSI information of the raw HSI image a normalized spectral power distribution (SPD) is determined of the field of view. From the normalized SPD a light source type LST estimate is generated, and the image is processed on the basis of the determined LST estimate. The estimated LST can be used to select more accurately the used lens shading correction (LSC) and color conversion matrix (CCM) parameters during run-time operation, in order to improve the color quality. The improvement in color quality results via making less mistakes in color shading correction and via using more accurate color conversion matrices. Especially incandescent, fluorescent, and LED light sources of similar CCT can be difficult to separate from each other without HSI information provided by the HSI image, i.e. the raw HSI image, while they can have clear difference in the required color shading correction and color conversion. Besides image quality improvements, HSI information enables also additional features, which can also benefit from the increased accuracy of SPD and LST estimates and spectral conversion matrix that the disclosed invention calculates. Examples of the other use cases include separation of fake plants from real plants, ripeness level of fruits, and many others. The presented invention does not limit how the calculated results are used. In particular, processing the image on the basis of the determined LST estimate is tailored to the specific application and not restricted to enhancing image appearance and quality of an end-user.

Preferably, processing the image on the basis of the determined LST estimate includes one or more of lens shading correction, color correction in particular by determining a color conversion matrix and auto white balancing AWB or spatial AWB.

Preferably, the LST estimate is determined commonly for the whole image. Alternatively, a LST estimate is determined for a part of the image. In particular, a 2D LST map can be created wherein the image is divided into tiles, wherein for each tile an LST estimate is provided. Therein, the tiles can be equal or the tiles can be adapted according to similarity (of color, exposure, noise or the like) in the acquired HSI image. In an example, the HSI image is divided into 16 x 12 tiles, wherein for each tile an individual LST estimate is determined. The estimated 2D LST map can also be used in spatial AWB to detect differently illuminated regions in the image which then can be handled individually by the spatial AWB. The spectral based LST can better separate the differently illuminated regions in the cases when the difference would be small or non-existent in the raw RGB image of a regular camera sensor.

Preferably, normalizing the HSI information to determine a normalized SPD of the field of view includes: determine a spectrum correction matrix (SCM) and applying the SCM to the HSI information. In particular, the SCM is a MxM matrix, wherein M denotes the number of color channels of the HSI sensor. The purpose of the SCM is to convert the raw HSI information or HSI sensor response so that it represents the SPD.

Preferably, the SCM is determined by an iterative optimization. Therein, optimization of the SCM may be performed by a well-known optimization algorithm, e.g. Broyden-Fletcher-Goldfarb-Shanno (BFGS) Algorithm, wherein the SCM is updated during the optimization loop. Other algorithms for optimization of the SCM are also possible.

Preferably, the SCM is determined by an iterative optimization including the steps of providing a set of N target SPD; determining an HSI sensor response for the N target SPD on the basis of the HSI sensor spectral sensitivity; normalizing the determined HSI sensor response by the SCM to determine a calculated normalized SPD; comparing the respective target SPD with the calculated normalized SPD; and adapting the coefficients of the SCM on the basis of the comparison between the respective target SPD and the calculated normalized SPD. These steps may be repeated until an error between the calculated normalized SPD and the target SPD is minimized or at least below a predetermined threshold. Thus, by the iterative optimization of the SCM target SPDs are uses from known light sources as ground truths for optimization. Therein, in particular the set of N target SPD contain more than ten target SPDs and preferably more than 20 target SPDs. Therein, in particular the SCM to be optimized is multiplied with a calculated channel response of the respective target SPD of the HSI sensor in order to determine the response of the normalization by the SCM. The N responses to the N target SPD are upscaled (for example by interpolation) and each compared to the target SPD as ground truth. On the basis of this comparison between the upscaled response and the ground truth target SPD the optimization of the SCM coefficients is determined.

Preferably, before normalizing of the HSI information to determine a normalized SPD of the field of view, the method includes: detecting achromatic areas of the image, wherein the normalized SPD is determined for the achromatic areas and the normalized SPD contains only illumination SPD. Thus, by considering the achromatic surface only, surface reflectance component of the image is reduced.

Preferably, before determining from the normalized SPD an LST estimate includes: providing the normalized SPD to a trained neural network classifying the normalized SPD to the LST estimate. Therein, preferably the neural network is a fully connected neural network having an input layer of the size equal to the number of color channels of the HSI sensor and an output layer of the size equal to the number of light source types to be identified. Therein, the number of light source types to be identified may be equal or different to the number of target SPD used in the process of optimization the SCM. In particular, the number of light source types to be identified by the neural network is independent from the number N of target SPDs described before.

In another aspect of the present invention a device is provided comprising an HSI sensor, a processor connected to the HSI sensor and a storage device connected to the processor, wherein the storage device stores instructions which when executed by the processor carry out the method as described before. In particular, the device is a mobile terminal such as a smartphone, tablet or the like or is part of such a mobile terminal, smartphone, tablet or the like.

In another aspect of the present invention a software storage device is provided storing instructions which when executed by a processor carry out the steps of the method described before.

In the following the present invention is described in more detail with reference to the accompanying figures.

The figures show:
- Fig. 1: a schematic flow diagram of the method according to the present invention,
- Fig. 2: a first embodiment of the method according to the present invention,
- Fig. 3: a second embodiment of the method according to the present invention,
- Fig. 4: a schematic representation of the optimization of the spectrum correction matrix,
- Fig. 5: another representation of the optimization of the spectrum correction matrix,
- Fig. 6: an estimation result,
- Fig. 7A and 7B: an example for the method according to the present invention, and
- Fig. 8: a device according to the present invention.

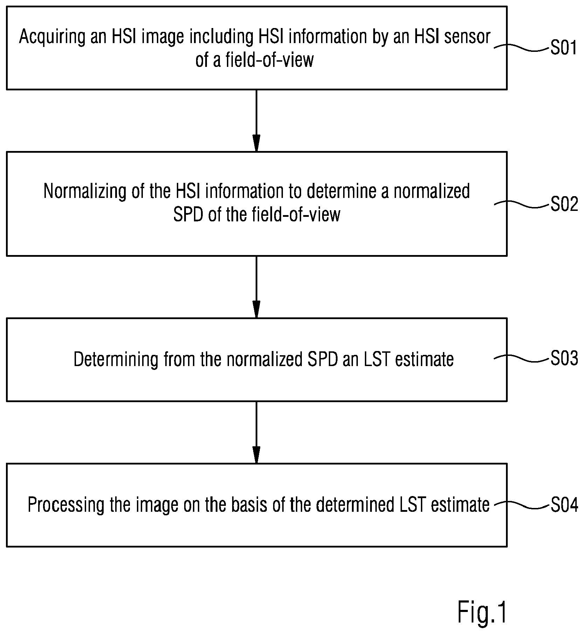

Referring to Fig. 1 showing the method according to the present invention. The method includes the following steps:
In step S01, a Hyperspectral Imaging (HSI) image is acquired including HSI information by an HSI sensor of a field-of-view.
In step S02, the HSI information is normalized to determine a normalized Spectral Power Distribution, SPD, of the field-of-view.
In step S03, a light source type (LST) estimate is determined from the normalized SPD.
In step S04, the image is processed on the basis of the determined LST estimate.

The present invention introduces algorithms and methods to estimate illumination spectral power distribution (SPD), light source type (LST), and can be further used to determine a correlated color temperature (CCT), when given the raw values or raw image from a multi-channel spectral ambient light sensor (ALS) or HSI. Both local and global estimates can be calculated for an image. LST is the primary output and SPD and CCT estimates are secondary outputs. The estimated LST, SPD, and CCT can be used to select more accurately the used lens shading correction (LSC) and color conversion matrix (CCM) parameters during run-time operation, in order to improve the color quality in smartphones or other camera products. The improvement in color quality results via making less mistakes in color shading correction and via using more accurate color conversion matrices. Especially incandescent, fluorescent, and LED light sources of similar CCT can be difficult to separate from each other without spectral ALS or HSI, while they can have clear difference in the required color shading correction and color conversion. AWB can estimate CCT well for many scenes, but cannot estimate LST robustly because it is using only RGB data as input and many SPDs can produce the same raw RGB response on the camera sensor. That is, higher spectral resolution is needed for more robust LST estimation than just the 3 bands from R, G, and B color components. The estimated 2D LST map can also be used in spatial AWB to detect differently illuminated regions in the image; the spectral based LST can better separate the differently illuminated regions in the cases when the difference would be small or non-existent in the raw RGB image of a regular camera sensor. Besides image quality improvements, HSIs enable also additional features, which can also benefit from the SPD and LST estimates and spectral conversion matrix that the disclosed invention calculates. Examples of the other use cases include separation of fake plants from real plants, ripeness level of fruits, and many others. The presented invention does not limit how the calculated results are used.

In a preferred step of the method an estimator of the SPD based on a conversion matrix of size MxM, Spectrum Correction Matrix (SCM), is determined, where M is the number of spectral bands in the HSI. The purpose of the SCM is to convert the raw HSI information, i.e. the raw HSI sensor response, so that it represents the SPD. Subsequently, an LST estimation is established using this normalized sensor SPD with a less complex neural network. The estimated LST will help further image processing algorithm to separate different light sources that are difficult or impossible to separate based on raw RGB data.

One of the benefits of the present invention is that it can be enabled without a large training dataset of spectral images, which would cover all the possible scenes and illuminations around the world. Such datasets are not publicly available, and gathering such datasets is a very resource intensive and expensive undertaking. Such large datasets would be required by many of the deep learning -based approaches to SPD and LST estimation.

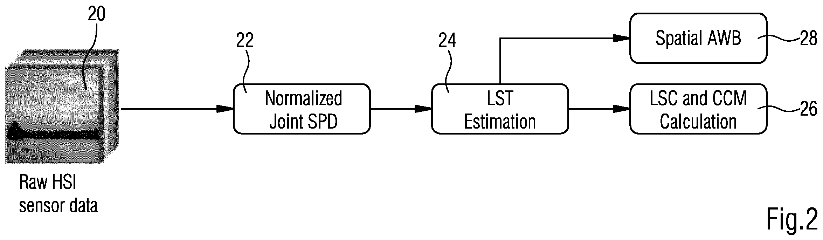

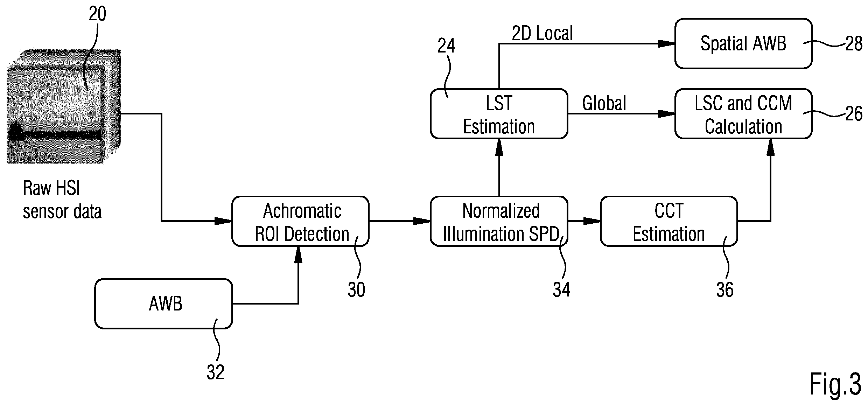

It should be noted that in this invention disclosure we present two alternative implementations depicted in Figs. 2 and 3, respectively: One that outputs and uses "joint SPD" that contains both illumination SPD and scene surface reflectance components, and another more complex one that outputs and uses illumination SPD without the surface reflectance component.

If the raw response is from achromatic object surface, then the SPD represents the illumination SPD. Otherwise, the SPD represents the combination of the surface reflectance and the illumination. This SPD is referred to as the joint SPD hereinafter.

Referring to Fig. 2, first the joint SPD 22 is determined by calculating a Spectrum Correction Matrix (SCM) based on the spectral responses of the individual HSI bands. This SCM converts HSI sensor raw response 20 to the normalized joint SPD 22.

In the alternative implementation shown in Figure 3, an AWB 32 is used for detecting achromatic or near-achromatic regions 30 in the image. Estimating the SPD from those achromatic or near-achromatic regions 30 will provide an estimate of illumination SPD 34 instead of joint SPD. Obtaining illumination SPD 34, without surface reflectance, leads to more reliable CCT and LST estimation since the estimated SPD is closer to the illumination SPD.

Referring back to Figures 2 and 3 together, an LST estimate 24 is determined based on the normalized SPD (joint SPD 22 in the embodiment of Fig. 2 and illumination SPD 34 in the embodiment of Fig. 3) by using a simple neural network. The LST estimate 24 will help further image processing algorithm to separate different light sources with similar CCT. In particular, the normalized illumination SPD 34 can be used for CCT estimation 36. Furthermore, the SPD and LST can be estimated both globally and locally. The local, two-dimensional, LST estimate will help spatial algorithms such as spatial AWB 28, which is trying to solve color constancy problems for multi-illumination scenes. The global LST estimate can be used in run-time control algorithms such as LSC and CCM parameter calculations 26.

In detail, the method may comprise the following steps:
1. Offline steps in preparation of the LST estimation - these steps need to be performed just once per HSI or at least once per HSI model:
   a) Given an HSI sensor response with M color components (i.e. spectral bands), the spectral response of each color component is characterized by using e.g. a monochromator setup, or the spectral responses are obtained from the component vendor. The used wavelength range could be e.g. 350-950 nm (roughly VIS+NIR) with 1 nm step size ("full wavelength range" hereinafter).
   b) A spectral conversion matrix (SCM) of size MxM is calculated that converts the raw HSI response into an SPD estimate. The optimization routine uses N different illumination SPDs as the training SPDs, such as a selected set of CIE Daylight, Planckian, CIE Fluorescent, and CIE LED SPDs. For an example, below 31 CIE illumination SPDs could be used for SCM coefficient optimization:
      - D40, D50, D65, D80, D95
      - P15, P20, P25, P30, P40
      - F1, F2, F3, F4, F5, F6, F7, F8, F9, F10, F11, F12
      - LED_B1, LED_B2, LED_B3, LED_B4, LED_B5, LED_BH1, LED_RGB1, LED_V1, LED_V2
2. Run-time steps for LST estimation:
   a) Achromatic ROI may be selected from the HSI image and the pixels inside the ROI are averaged per each color component (if the resolution of the HSI is more than 1x1). The ROI could be the whole image area, or it could concentrate on the image areas that are the closest to achromatic areas, which could be detected based on the current white point estimate of the AWB. If local estimates are calculated instead of one global estimate, then the image area is divided into multiple ROIs, e.g. evenly spaced grid of size 16x12.
      i) Concentrating to image areas that are the closest to achromatic reduces SPD modification via surface reflectances of chromatic objects. However, while being significant for SPD and CCT estimates, this does not impact as much the LST detection which is the most important output from the method.
      ii) In order to match and surpass the ability of modern AWB to exclude the impacts of image contents on illumination estimate, deep learning methods would need to be applied by using extensive annotated HSI data around the world as the training data. However, the present invention is intended for cases when such extensive training data is not available, which is the case currently.
   b) In the commonly used linear image formation model, the i-th component of the HSI raw response cᵢ, is calculated by multiplying with each other the HSI channel's spectral sensitivity Sᵢ(λ), the SPD of the illuminant L(λ), the spectral reflectance of the captured object R(λ) and a normalization constant k (dark current is discarded). Δλ can be e.g. 1 nm, with λ being the wavelength.
   c) SCM is calculated by using an iterative optimization algorithm.

The relation between an SPD estimate having M bands and the raw HSI sensor response can be approximated as SPD = SCM*c (MxM matrix multiplied by Mx1 vector). The resulting M band SPD estimate is upscaled to full wavelength range via interpolation and extrapolation to be able to compare it against ground truth SPDs. This upscaled SPD estimate is used for calculating loss by using mean squared error distance to ground truth illumination SPD. The loss is used in the optimization algorithm (e.g. Broyden-Fletcher-Goldfarb-Shanno (BFGS) Algorithm) and SCM is updated during the process.

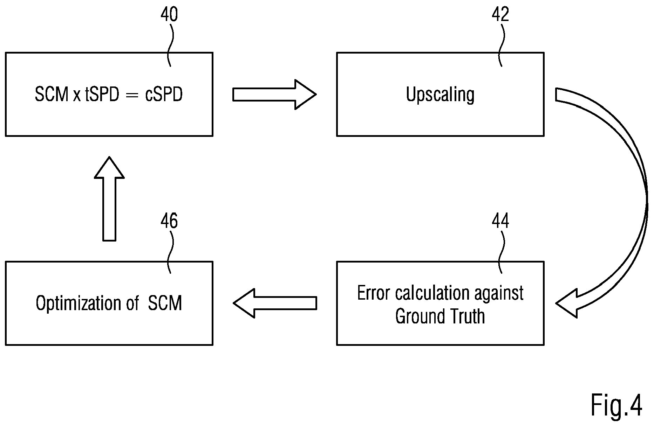

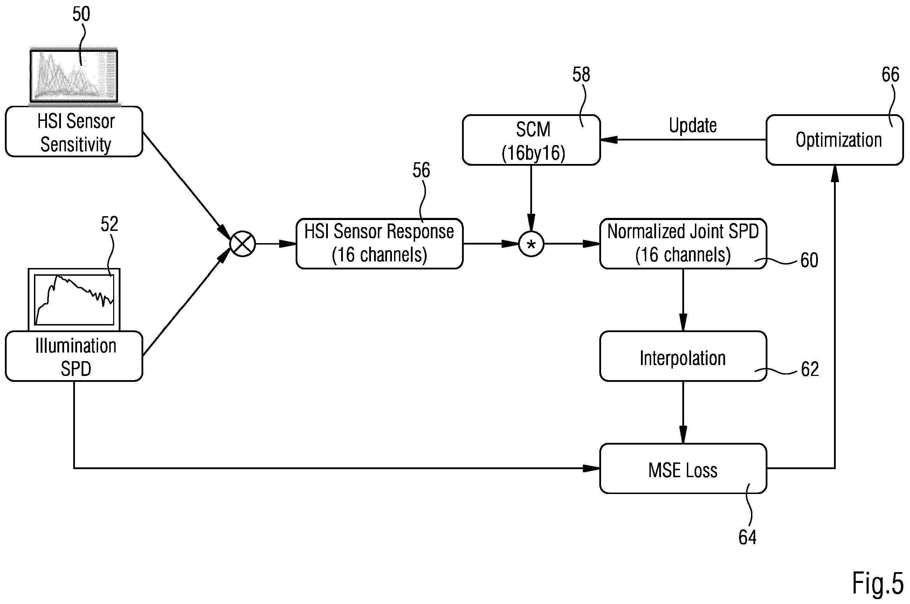

In more detail it is referred to the Figs. 4 and 5 showing the optimization of the SCM. In a first step 40 the SCM is multiplied by calculated channel responses of the HSI sensor for the target SPD. Therein, the target SPDs are represented by an MxN Matrix tSPD, wherein N is the number of target SPDs. From the target SPDs an HSI sensor response is calculated by the HSI sensor sensitivity as explained above. The cSPD is the calculated normalized SPD starting from the target SPD and normalized with the SCM to be optimized. Therein, from the cSPD in step 42 the full SPD is determined by upscaling, for example by bi-linear upscaling in the range between 350 nm to 950 nm with for example 1 nm steps. The upscaled SPD determined from the calculated SPD is in step 44 compared to the ground truth provided by the target SPD. In particular, error calculation could be performed by mean squared error distance between the upscaled SPD and the ground truth. On the basis of the comparison of step 44, in step 46 optimization of the SCM matrix is performed which is then used in a following iteration in step 40 again.

Fig. 5 also illustrates the process of calculating the SCM, wherein the HSI sensor sensitivity 50 and the illumination SPD of the target SPD 52 is used in order to determine the HSI sensor response for each of the M channels. Therein, in the example of Fig. 5. The HSI sensor is assumed to have 16 channels. However, the present invention is not limited to this number of channels. The SCM matrix 58, in the present example provided by a 16 x 16 matrix, is then multiplied with the HSI sensor response 56 in order to determine a normalized joint SPD 60 which is upscaled by interpolation 62. The upscaled normalized joint SPD is compared to the illumination target SPD 52 to determine a loss 64 which is used for optimization 66 of the SCM.

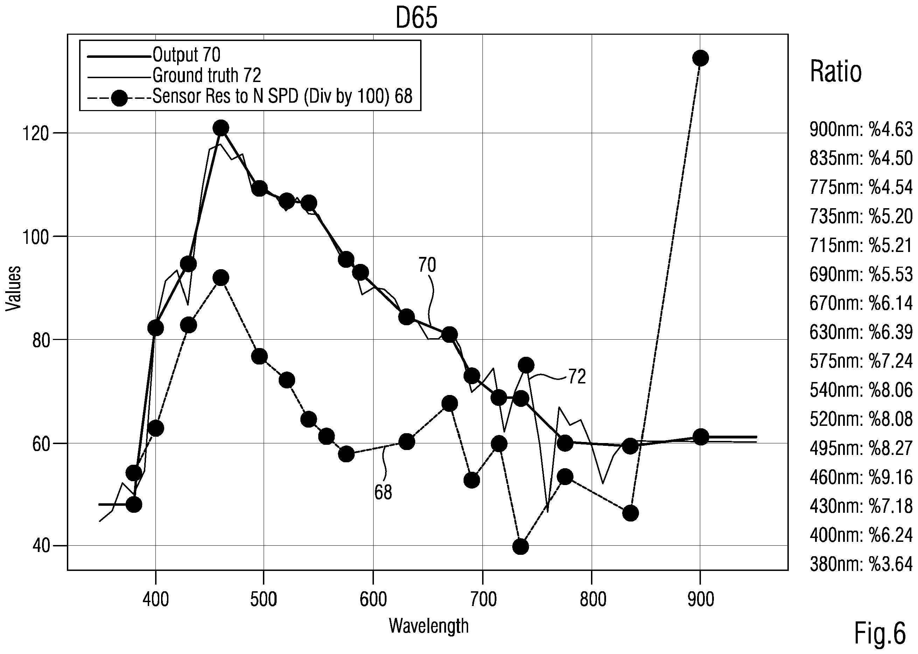

Fig. 6 shows the result after optimization the SCM. In Fig. 6 the sensor response for a D65 illumination is shown by curve 68. Curve 70 shows the determined normalized SPD by applying the optimized SCM to the sensor output of the HSI sensor. In comparison to the normalized SPD determined by the SCM in Fig. 6 by curve 72, also the ground truth SPD of the D65 illuminant is shown. As shown in Fig. 6, the normalized SPD closely follows the real spectral power distribution of the D65 illuminant. Therein, in the curve 68 and 70 the dots represent peak wavelengths of each channel of the HSI sensor. Therein, increasing the number of channels of the HSI sensor will consequently also increase the accuracy of the output of the normalized SPD and the closer the SCM resemble the ground truth SPD of the D65 illuminant.

After the normalized SPD is determined, LST estimation need to be carried out:
a) Light source type (LST) can be estimated based on the estimated SPD. This is done by using a shallow neural network (NN) that can be trained by using available databases for illumination SPDs and surface reflectances. All possible combinations between the illuminations and surface reflectances are used during training, and the NN calculates the likelihood of light sources that could explain the current sensor response. For simple 3 category separation between daylight, Planckian, and FILED even simple decision tree can be used, but more categories can be detected by using NN.
   - For illumination SPD, CIE daylights and Planckian light sources of different CCTs, CIE F series, CIE LED series, and additional light source types that are wanted to be detected.
   - For surface reflectance, this means e.g. publicly available Image Engineering In-Situ dataset, Munsell dataset, and ECOSTRESS spectral library from NASA.
   - For the image area of one grid cell in the 16x12 grid, it applies better that this cell area is representing one type of surface, whereas averaging whole image area will be more likely to mix multiple different surface types.
   - CCT estimate can be calculated based on the estimated SPD and illumination SPD by using commonly available conversion function (e.g. Robertson method)

In an example the NN may have four fully connected hidden layers with three weight groups (Wi) and the standard Adam optimizer can be used with a cyclic learning rate. The first layer (input) may have 16 channels equal to the number of channels of the HSI sensor, and the last layer(output) may have 38 channels, which is the number of light sources used for this training and targeted to be identified by the NN. The NN may work as a classification and after the last layer, a sigmoid function may be used to provide weight for each light source. The maximum weight is chosen as the LST estimate.

The main benefits of the presented invention are as below:
- Ability to produce LST estimates without having a large dataset of spectral images for training (in fact, without having any spectral images for training).
- Ability to add support for new HSI or spectral ALS sensors by just performing a well-established spectral characterization of the bands of the sensor; no capturing of new training data with the new sensor nor re-training needs to be done.

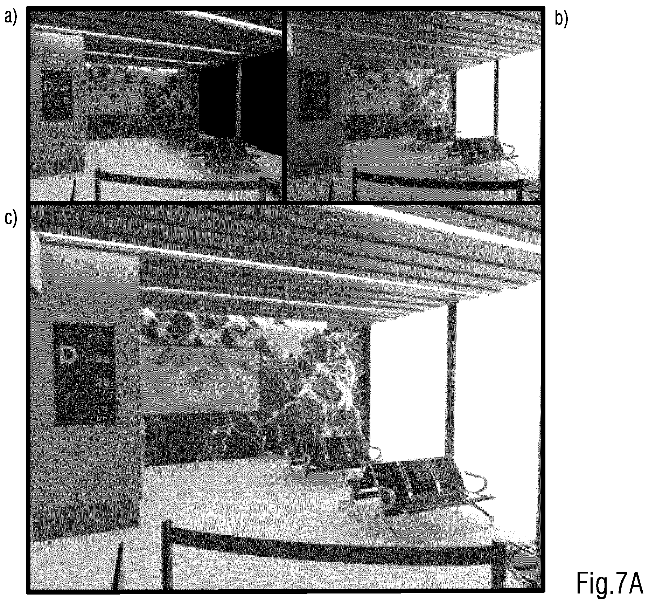

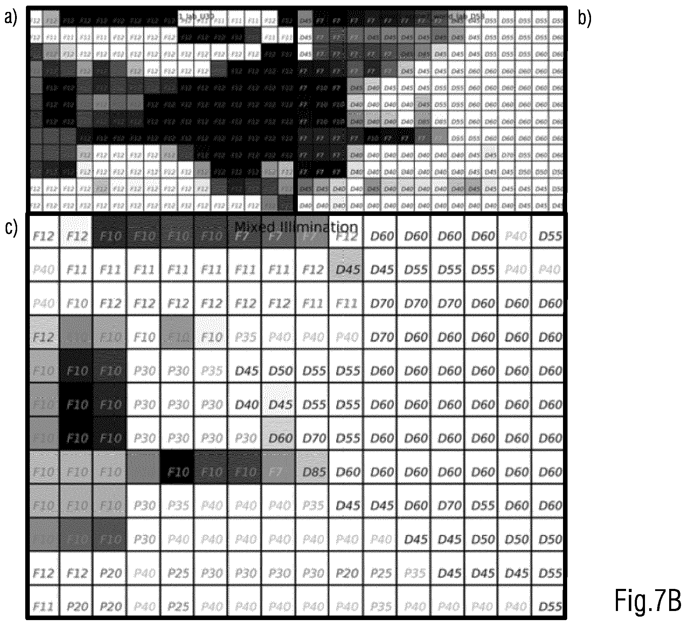

Referring to Figs. 7A and 7B showing an example result of the LST estimation according to the present invention. Therein, Fig. 7A shows rendered images in U30 illumination (image a) - top left), D58 illumination (image b) - right top) and mixed illumination by combining both illuminations (image c) - bottom). The images are in sRGB domain and white balance corrected for better visualization. The mixed illumination (image c) - bottom) uses the average of the white balances; thus, the color difference is visible compared to single illumination images.

LST estimation according to the present invention is performed as shown in Fig. 7B of the rendered images with U30 illumination (image a) - top left), D58 illumination (image b) - right top) and the mixed illumination (image c) - bottom), respectively. The estimations of Fig. 7B thus represent the LST estimates of the corresponding images of Fig. 7A. Therein, each image is divided into 16x12 tiles, wherein for each tile an LST estimate is determined. The grayscale background defines the confidence level of the block. If the block is white, it has reliable LST estimation and decreases towards black. The LST estimation is written in the boxes with color coding, just to visualize the separation of the LSTs easily.

As it is described before, knowledge about the LSTs are extremely valuable for understanding the mixed illumination scenes in order to process the colors accordingly.

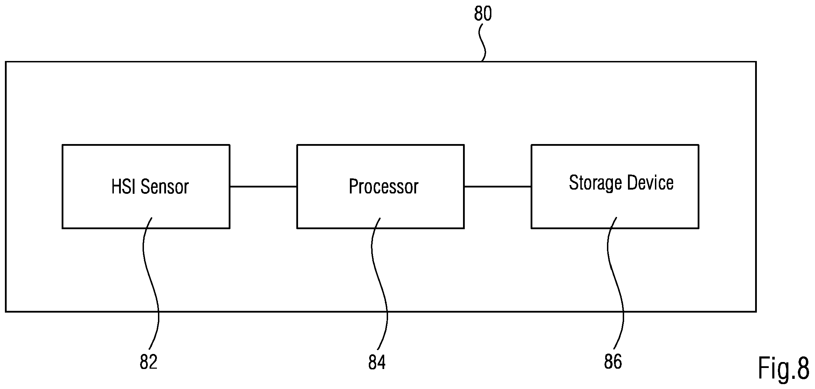

Referring to Fig. 8 showing a device 80 according to the present invention. The device 80 can be a terminal or can be implemented in a terminal. The device 80 comprises a HSI sensor 82 and a processor 84 connected to the HSI sensor 82. Further, the device 80 may comprise a storage device 86 that stores instruction which when executed by the processor 84 perform the steps of the method according to the present invention. Therein, the processor 84 may be a dedicated hardware for carrying out the steps of the method according to the present invention or may be the main processor of the terminal.

In general, separation of the different light source types can be done by the present invention successfully regardless of the image contents, even when chromatic scene contents modifies the SPD and CCT estimates (e.g. reddish image contents lowers the estimated CCT, and bluish image contents raises the estimated CCT). Impact from the scene contents can be further reduced by using only the image regions that are the closest to achromatic, based on AWB results for that image.

## Claims

1. Method for image processing, preferably implemented in a camera device, including:
Acquiring a Hyperspectral Imaging, HSI, image including HSI information by an HSI sensor of a field-of-view;
Normalizing of the HSI information to determine a normalized Spectral Power Distribution, SPD, of the field-of-view;
Determining from the normalized SPD a light source type, LST, estimate; and
Processing the image on the basis of the determined LST estimate.

2. Method according to claim 1, wherein processing the image on the basis of the determined LST estimate includes one or more of lens shade correction, color correction, and spatial auto white balancing, AWB.

3. Method according to claim 1 or 2, wherein the LST estimate is determined commonly for the whole image or an LST estimate is determined for a part of the image.

4. Method according to any of claims 1 to 3, wherein normalizing the HSI information to determine a normalized SPD of the field-of-view includes: Determine a Spectrum Correction Matrix, SCM, and applying the SCM to the HSI information.

5. Method according to claim 4, wherein the SCM is a MxM matrix, wherein M denotes the number of color channels of the HSI sensor.

6. Method according to claims 4 or 5, wherein the SCM is determined by an iterative optimization with the steps of:
Providing a set of N target SPD;
Determining a HSI sensor response for the N target SPD on the basis of the HSI sensor spectral sensitivity;
Normalizing the determined HSI sensor response by the SCM to determine a calculated normalized SPD;
Comparing the respective target SPD with the calculated normalized SPD; and
Adapting the coefficients of the SCM on the basis of the comparison between the respective target SPD and the calculated normalized SPD.

7. Method according to claim 6, wherein the set of N target SPD contains more than 10 target SPD and preferably more than 20 target SPD.

8. Method according to any of claims 1 to 7, wherein before normalizing of the HSI information to determine a normalized Spectral Power Distribution, SPD, of the field-of-view, the method includes:
Detecting achromatic areas of the image, wherein the normalized SPD is determined for the achromatic areas and the normalized SPD contains only illumination SPD.

9. Method according to any of claims 1 to 8, wherein determining from the normalized SPD an LST estimate includes:
Providing the normalized SPD to a trained neural network classifying the normalized SPD to the LST estimate.

10. Method according to claim 9, wherein the neural network is a convolutional network having an input layer of the size equal to the number of color channels of the HSI sensor and an output layer of the size equal to the number of light source types to be identified.

11. Method according to any of claims 1 to 10, wherein the HSI sensor has more than three, preferably more than ten color channels.

12. Method according to any of claims 1 to 11, wherein the whole image is divided in preferably equal tiles, wherein for each tile an LST estimate is determined.

13. Device comprising an HSI sensor, a processor connected to the HSI sensor and a storage device connected to the processor, wherein the storage device stores instructions which when executed by the processor carry out the method according to any of claims 1 to 12.

14. Software storage device storing instructions which when executed by a processor carry out the steps of the method according to any of claims 1 to 12.
